# EUROPÄISCHE PATENTSCHRIFT

(11) **EP 3 569 905 B1**
(45) Veröffentlichungstag und Bekanntmachung des Hinweises auf die Patenterteilung: **13.11.2024**
(21) Anmeldenummer: 19170088.9
(22) Anmeldetag: 18.04.2019
(51) Int. Cl.: F16K 37/00, F16J 3/02, F16K 7/12, G06K 19/077

(54) **VENTILMEMBRAN, MEMBRANVENTIL, SOWIE VERFAHREN ZUM BEFESTIGEN EINES IN EINEM GEHÄUSE AUFGENOMMENEN DATENTRÄGERS**
VALVE DIAPHRAGM, MEMBRANE VALVE AND METHOD FOR FIXING A DATA CARRIER IN A HOUSING
MEMBRANE DE SOUPAPE, SOUPAPE À MEMBRANE AINSI QUE PROCÉDÉ DE FIXATION D'UN SUPPORT DE DONNÉES LOGÉ DANS UN BOÎTIER

(30) Priorität: 14.05.2018 DE 102018111383
(43) Veröffentlichungstag der Anmeldung: 20.11.2019
(60) Teilanmeldung: 24202303.4
(73) Patentinhaber: GEMÜ Gebr. Müller Apparatebau GmbH & Co. Kommanditgesellschaft, 74653 Ingelfingen (DE)
(72) Erfinder: Lebonte, Christophe, 67210 NIEDERNAI (FR); Meier, Rolf, 77955 Ettenheim (DE); Knaus, Pascal, 74670 Forchtenberg (DE); Meinikheim, Steffen, 74653 Ingelfingen (DE); Müller, Gert, 74653 Ingelfingen (DE)
(74) Vertreter: DREISS Patentanwälte PartG mbB

(56) Entgegenhaltungen:
- EP-A1- 2 242 004
- EP-B1- 2 242 004
- WO-A1-2014/122239
- DE-A1- 102013 214 304
- DE-A1- 102015 210 204
- DE-U1- 202011 050 941
- US-A1- 2009 212 912
- US-A1- 2012 119 130
- US-B1- 6 239 737

## Beschreibung

Die Erfindung betrifft eine Ventilmembran und ein Membranventil.

Die DE 10 2013 214 304 A1 beschreibt eine Ventilmembran. Diese weist eine seitlich abragende Lasche auf, in der ein Datenträger angeordnet ist. Der Datenträger gehört zu einem RFID-Chip, in dem die Herstellung und den Betrieb der Ventilmembran betreffende Daten gespeichert sind, die drahtlos von außen ausgelesen werden können.

Aus der US 2012/0119130 A1 ist ein Membranventil mit einer Öffnung bekannt, in die ein Anschlussverbinder eingesteckt werden kann.

Die DE 10 2015 210 204 A1 beschreibt allgemein ein Membranventil mit einem RFID-Chip.

DE 20 2011 050 941 U1 offenbart einen RFID-Tag zur Bestückung von chirurgischen Instrumenten.

US 2009/212912 A1 offenbart ein Wäscheetikett, das einen ersten Steckerteil mit mindestens einem vorstehenden Element und einen zweiten Buchsenteil umfasst. Es wird ein ausgesparter Bereich definiert, um das vorstehende Element aufzunehmen und fest daran anzugreifen, um die beiden Teile zusammenzuhalten, wobei einer der Teile einen passiven RFID-Transponder umfasst. Ein Wäschekennzeichnungssatz und ein Wäschemanagementsystem sowie ein Verfahren zur Kennzeichnung von Wäsche zum Betrieb eines solchen Systems werden ebenfalls beschrieben.

US 6 239 737 B1 offenbart ein Verfahren und eine Vorrichtung zur Anbringung eines RF/ID-Transponders an einem Objekt. Der Transponder ist in eine Befestigungsvorrichtung integriert, um den Transponder vor Beschädigungen, gefährlichen Umgebungen und Manipulationen zu schützen. Durch die Integration des Transponders in die Befestigungsvorrichtung kann die Vorrichtung außerdem versenkt werden, um den Transponder weiter zu schützen. Darüber hinaus wird durch die Herstellung der Vorrichtung aus einem Nichteisenmaterial eine Beeinträchtigung des Lesebereichs des Transponders verhindert.

Aufgabe der vorliegenden Erfindung ist es, eine Ventilmembran und ein Membranventil, die eine einfache, schnelle, preiswerte und zuverlässige Herstellung der Ventilmembran und ein zuverlässiges Auslesen von auf dem Datenträger gespeicherten Daten und/oder auch ein zuverlässiges Einlesen von Daten ermöglichen.

Diese Aufgabe wird durch eine Ventilmembran gemäß dem Anspruch 1 und ein Membranventil gemäß einem abhängigen Anspruch gelöst. Vorteilhafte Weiterbildungen der Erfindung sind in Unteransprüchen angegeben. Darüber hinaus finden sich für die Erfindung wesentliche Merkmale in der nachfolgenden Beschreibung und in der beigefügten Zeichnung.

Konkret wird eine Ventilmembran vorgeschlagen, die einen Flanschabschnitt und einen mit diesem meist einstückigen Membranabschnitt umfasst. Der Membranabschnitt wird von einem Antrieb quer zur Erstreckung der Ventilmembran bewegt und hierdurch der Fluss eines Fluids gesteuert. Der Membranabschnitt, meist jedoch sowohl der Membranabschnitt als auch der Flanschabschnitt, kann bzw. können beispielsweise aus einem EDPM-Material (Ethylen-Propylen-Dien-Kautschuk) hergestellt sein. Der Flanschabschnitt umgibt den Membranabschnitt und ist im allgemeinen zwischen zwei Gehäuseteilen eines Membranventils fluiddicht verklemmt. Der Membranabschnitt hat in der Draufsicht meist eine wenigstens in etwa kreisrunde Kontur, wohingegen der Flanschabschnitt in der Draufsicht oft eine insgesamt in etwa viereckige oder in etwa kreisrunde Außenkontur aufweist und durch einen umlaufenden und nach radial auswärts weisenden und wenigstens bereichsweise flächigen Rand begrenzt wird. Wie es typisch ist für eine Membran, weist die Ventilmembran eine im Vergleich zu ihrer Erstreckung in einer x-Richtung und einer y-Richtung geringe Erstreckung in z-Richtung auf, sie ist also vergleichsweise dünn, jedoch meist ausreichend dick, um gleichwohl einen wenigstens bereichsweise flächigen Rand aufzuweisen. Die Ventilmembran ist beispielhaft aus einem Gummimaterial hergestellt.

Erfindungsgemäß umfasst die Ventilmembran einen in einem Gehäuse aufgenommenen elektronischen Datenträger. Dieser gehört vorzugsweise zu einem RFID-Chip, er kann also drahtlos ausgelesen und/oder mit Daten beschrieben werden. Die Erfindung wendet sich ganz bewusst von der bisherigen Technik, den Datenträger bzw. RFID-Chip möglichst unauffällig zu verstecken, ab. Stattdessen ist das Gehäuse mit dem Datenträger erfindungsgemäß an dem Rand des Flanschabschnitts so angeordnet, dass es, wenn ein Benutzer von radial außen auf den Rand blickt, von diesem wenigstens zum Teil gesehen werden kann.

Damit ist die Position des Datenträgers jederzeit für einen Benutzer von außen sichtbar, so dass ein drahtloses Lesegerät und/oder ein drahtloses Schreibgerät genau am Datenträger platziert werden kann, wodurch ein sicherer Datentransfer ermöglicht wird. Dabei können auch solche sehr klein bauende Datenträger verwendet werden, die mit einer klein bauenden Antenne versehen sind und die daher für den Datentransfer einen möglichst geringen Abstand zwischen dem Datenträger (bzw. der Antenne) und dem Lese- und/oder Schreibgerät erfordern.

Durch die Positionierung des Datenträgers in einem Gehäuse so, dass dieses für einen Benutzer von außen sichtbar ist, kann das Gehäuse auch auf einfache Art und Weise sogar nachträglich an einer Ventilmembran befestigt werden, wodurch die Herstellkosten gesenkt werden. Das Gehäuse kann dabei eine fast beliebige Form haben. Möglich ist beispielsweise eine insgesamt in etwa Quaderform, eine Kugelform, Zylinderform, etc.

Eine Weiterbildung zeichnet sich dadurch aus, dass in oder an dem Rand eine Vertiefung vorhanden ist, in der das Gehäuse mindestens bereichsweise aufgenommen ist. Eine solche Vertiefung kann beispielsweise bereits bei der Herstellung der Ventilmembran, beispielsweise bei deren Vulkanisieren, erzeugt werden, wodurch eine eindeutige und für die spezielle Ventilmembran immer gleichbleibende Position des Gehäuses gewährleistet wird. Durch die Anordnung in einer Vertiefung wird das Gehäuse darüber hinaus vor äußeren Einflüssen geschützt.

Eine Weiterbildung zeichnet sich dadurch aus, dass das Gehäuse von dem Rand absteht. Auf diese Weise sind das Gehäuse und somit der Datenträger jederzeit für einen Benutzer ortbar, da der Rand des Flanschabschnitts bei üblichen Membranventilen immer von außen sichtbar ist. Darüber hinaus ist dies sehr einfach und somit preiswert herstellbar.

Eine Weiterbildung zeichnet sich dadurch aus, dass an dem Rand eine Lasche vorhanden ist, in der das Gehäuse mindestens bereichsweise aufgenommen oder auf die das Gehäuse aufgesetzt ist. Dies ermöglicht es, den Ort der Befestigung des Gehäuses an der Ventilmembran von dem Bereich des Flanschabschnitts, der mit einem Gehäuse des Membranventils kooperiert, zu entfernen, so dass weder die Klemmung gestört noch das Gehäuse mit dem Datenträger durch die Klemmung beschädigt werden. Außerdem ist eine solche Lasche von außen optisch leicht wahrnehmbar. Dabei ist es grundsätzlich möglich, dass die Lasche gemeinsam mit der Ventilmembran in einem einzigen Herstellvorgang hergestellt wird, beispielsweise durch Vulkanisieren. Denkbar ist aber auch, dass die Lasche mit dem Gehäuse in einem separaten Herstellvorgang hergestellt und anschließend mit dem Flanschabschnitt verbunden wird, beispielsweise durch Kleben.

Die optische Wahrnehmbarkeit einer solchen Lasche wird nochmals verbessert, wenn die Lasche eine vom Rest der Ventilmembran abweichende, vorzugsweise eine optisch auffällige Farbe aufweist.

Eine Weiterbildung zeichnet sich dadurch aus, dass an dem Gehäuse mindestens eine Verankerungseinrichtung zur Verankerung des Gehäuses an dem oder in dem Flanschabschnitt vorhanden ist. Durch die Verankerungseinrichtung wird eine mechanische Verbindung zwischen dem Gehäuse und dem Flanschabschnitt geschaffen, wodurch das Gehäuse noch zuverlässiger mit dem Flanschabschnitt verbunden werden kann.

In Weiterbildung hierzu wird vorgeschlagen, dass die Verankerungseinrichtung mindestens einen Verankerungszapfen umfasst. Ein solcher ist einfach herstellbar. Denkbar ist dabei, dass der Verankerungszapfen zur Verankerung des Gehäuses in den Flanschabschnitt beispielsweise eingepresst wird.

In Weiterbildung hierzu wird vorgeschlagen, dass der Verankerungszapfen mindestens einen Formschlussabschnitt aufweist. Hierdurch wird die Verankerungswirkung nochmals verbessert.

In Weiterbildung hierzu wird vorgeschlagen, dass der Verankerungszapfen mindestens zwei vorzugsweise hintereinander angeordnete Formschlussabschnitte aufweist. Hierdurch wird die Verankerung nochmals verbessert.

Eine Weiterbildung zeichnet sich dadurch aus, dass der Formschlussabschnitt pilzkopfartig ausgebildet ist. Hierdurch wird das Gehäuse - zumindest zerstörungsfrei - weitgehend unlösbar mit dem Flanschabschnitt verbunden.

In Weiterbildung hierzu wird vorgeschlagen, dass der pilzkopfartig ausgebildete Formschlussabschnitt seitlich abgeflacht ist. Dies erleichtert das Einsetzen (beispielsweise Einpressen) der Verankerungseinrichtung in den Flanschabschnitt.

Eine Weiterbildung zeichnet sich dadurch aus, dass die Verankerungseinrichtung mindestens einen sich mindestens teilweise in Umfangsrichtung des Rands erstreckenden Halteabschnitt aufweist. Ein solcher Halteabschnitt wirkt also ähnlich wie eine Art "Umreifung" oder "Umklammerung" und sorgt so für einen zuverlässigen Halt des Gehäuses am Flanschabschnitt. Dabei sei an dieser Stelle darauf hingewiesen, dass ein solcher Halteabschnitt sowohl bei einer runden Außenkontur als auch bei einer im Wesentlichen eckigen Außenkontur des Flanschabschnitts möglich ist.

In Weiterbildung hierzu wird vorgeschlagen, dass der Halteabschnitt wenigstens teilweise in einer im Rand des Flanschabschnitts vorhandenen nutartigen Vertiefung angeordnet ist. Hierdurch wird die Halterung des Halteabschnitts am Flanschabschnitt nochmals sicherer gemacht.

Eine Weiterbildung zeichnet sich dadurch aus, dass eine Antenne in der Verankerungseinrichtung angeordnet ist. Die Länge der Antenne kann auf diese Weise vergrößert werden, wodurch der Datenaustausch zuverlässiger gemacht wird. Dies gilt insbesondere dann, wenn die Verankerungseinrichtung den oben erwähnten Halteabschnitt umfasst.

Eine Weiterbildung zeichnet sich dadurch aus, dass zwischen der Verankerungseinrichtung und dem Gehäuse eine Sollbruchstelle vorhanden ist. Hierdurch wird eine Manipulation der Ventilmembran erschwert oder sogar ausgeschlossen, da das Gehäuse mit dem Datenträger nicht zerstörungsfrei von der Ventilmembran entfernt werden kann.

Eine Weiterbildung zeichnet sich dadurch aus, dass das Gehäuse an dem Flanschabschnitt wenigstens auch durch eine Klebung befestigt ist. Eine Klebung ist sehr einfach zu realisieren. Erfolgt sie zusätzlich zu der oben erwähnten Verankerungseinrichtung, wird hierdurch die Verankerung des Gehäuses am Flanschabschnitt nochmals verbessert.

In Weiterbildung hierzu wird vorgeschlagen, dass die Klebung durch Erwärmen aktivierbar ist. Die Temperatur, bei der die Klebung aktivierbar ist, sollte dabei unter jener Temperatur liegen, bei der der Flanschabschnitt und/oder der Membranabschnitt der Ventilmembran eine Eigenschaft ändern. Durch einen durch Erwärmen aktivierbaren Kleber wird die Handhabung vereinfacht. Beispielsweise kann der Kleber vorab auf das Gehäuse aufgetragen werden.

In Weiterbildung hierzu wird vorgeschlagen, dass ein Material, aus dem die Klebung hergestellt ist, einen vorzugsweise optisch auffälligen Farbstoff umfasst. Damit trägt auch die Klebung zur leichteren Lokalisierung des Gehäuses und somit des Datenträgers durch einen Benutzer bei.

Eine Weiterbildung zeichnet sich dadurch aus, dass mindestens eine von außen sichtbare Oberfläche des Gehäuses eine optisch auffällige Farbe aufweist. Auch hierdurch wird die Lokalisierung des Gehäuses und somit des Datenträgers durch einen Benutzer erleichtert.

Ein Beispiel betrifft ein Membranventil, dessen Ventilmembran wie oben beschrieben ausgestaltet ist. Dabei ist besonders bevorzugt, wenn die Ventilmembran eine Verankerungseinrichtung mit einem Formschlussabschnitt aufweist, und dass ein Ventilgehäuse den Flanschabschnitt der Ventilmembran in axialer Richtung der Verankerungseinrichtung gesehen außerhalb des Formschlussabschnitts klemmt. Somit wird weder die Klemmung durch die Verankerungseinrichtung beeinträchtigt, noch wird die Verankerungseinrichtung durch die Klemmung beschädigt.

Ein Beispiel umfasst ein Verfahren zum Befestigen eines in einem Gehäuse aufgenommenen Datenträgers an einer flachen, einen Rand aufweisenden Struktur, insbesondere an einer Ventilmembran, wobei der Datenträger insbesondere zu einem RFID-Chip gehört. Das Verfahren zeichnet sich dadurch aus, dass das Gehäuse auf dem Rand der Struktur so angeordnet wird, dass es, von außen auf den Rand gesehen, sichtbar ist.

Nachfolgend werden Ausführungsbeispiele unter Bezugnahme auf die beigefügte Zeichnung erläutert. In der Zeichnung zeigen:
- Figur 1: eine perspektivische Darstellung einer ersten Ausführungsform einer Ventilmembran mit einem Membranabschnitt und einem Flanschabschnitt und einem von außen sichtbaren Gehäuse mit einem Datenträger;
- Figur 2: eine Darstellung ähnlich zu Figur 1 einer zweiten Ausführungsform einer Ventilmembran;
- Figur 3: eine Darstellung ähnlich zu Figur 1 einer dritten Ausführungsform einer Ventilmembran, die nicht Teil der vorliegenden Erfindung ist;
- Figur 4: eine Darstellung ähnlich zu Figur 1 einer vierten Ausführungsform einer Ventilmembran;
- Figur 5: eine Darstellung ähnlich zu Figur 1 einer fünften Ausführungsform einer Ventilmembran mit einem sichtbaren ersten Typ von Verankerungsrichtung des Gehäuses;
- Figur 6: eine Draufsicht auf eine sechste Ausführungsform einer Ventilmembran mit einem sichtbaren zweiten Typ von Verankerungseinrichtung des Gehäuses;
- Figur 7: eine Draufsicht auf eine siebte Ausführungsform einer Ventilmembran; mit einem sichtbaren dritten Typ von Verankerungseinrichtung des Gehäuses
- Figur 8: eine perspektivische Darstellung eines Gehäuses mit einem vierten Typ von Verankerungseinrichtung;
- Figur 9: eine Darstellung ähnlich zu Figur 8 mit einem fünften Typ von Verankerungseinrichtung;
- Figur 10: eine Darstellung ähnlich zu Figur 8 mit einem sechsten Typ von Verankerungseinrichtung;
- Figur 11: eine Darstellung ähnlich zu Figur 8 mit einem siebten Typ von Verankerungseinrichtung;
- Figur 12: eine Darstellung ähnlich zu Figur 8 mit einem achten Typ von Verankerungseinrichtung;
- Figur 13: eine Darstellung ähnlich zu Figur 8 mit einem neunten Typ von Verankerungseinrichtung;
- Figur 14: einen teilweisen Schnitt durch eine Ventilmembran mit einem Gehäuse mit einem zehnten Typ von Verankerungseinrichtung;
- Figur 15: einen teilweisen Schnitt durch eine Ventilmembran mit einem Gehäuse mit einem elften Typ von Verankerungseinrichtung;
- Figur 16: eine Seitenansicht auf Gehäuse mit einem zwölften Typ von Verankerungseinrichtung; und
- Figur 17: einen teilweisen Schnitt durch eine Ventilmembran, ein Gehäuse mit einer Verankerungseinrichtung vom fünften Typ und Teile eines Ventilgehäuses.

Nachfolgend tragen funktionsäquivalente Elemente und Bereiche in unterschiedlichen Ausführungsformen die gleichen Bezugszeichen. Sie werden im Normalfall nicht mehrfach erläutert werden.

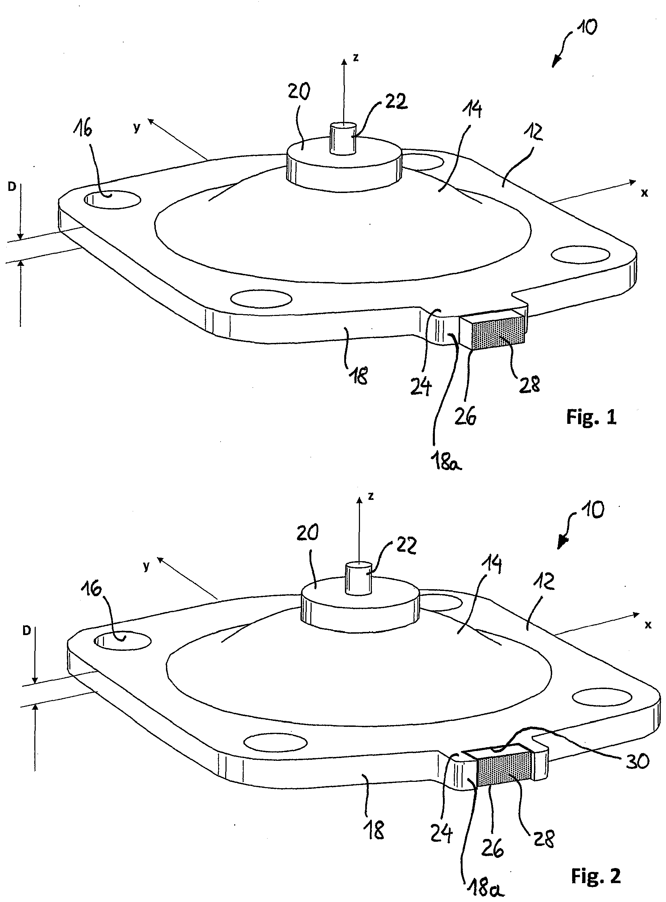

Eine erste Ausführungsform einer Ventilmembran trägt in Figur 1 insgesamt das Bezugszeichen 10. Sie dient zum Einsatz in einem Membranventil und umfasst einen radial äußeren Flanschabschnitt 12 und einen mit diesem einstückig verbundenen zentrischen Membranabschnitt 14. Ein solches Membranventil ist beispielhaft in der DE 10 2015 212 997 A1 beschrieben, deren Offenbarung vor allem im Hinblick auf den grundsätzlichen Aufbau und die grundsätzliche Funktion eines Membranventils daher auch zum Gegenstand der vorliegenden Anmeldung gemacht wird.

Während der Flanschabschnitt 12 flach und eben ist, ist der Membranabschnitt 14 in der in Figur 1 gezeigten Stellung nach oben gewölbt. Wie weiter unten noch gezeigt werden wird, ist der Flanschabschnitt dann, wenn die Ventilmembran 10 in ein Membranventil eingebaut ist, zwischen zwei Gehäuseteilen des Membranventils fluiddicht verklemmt. Hierzu sind in dem Flanschabschnitt 12 vier Durchgangsöffnungen 16 vorhanden, durch die Schrauben hindurchgeführt werden können, welche die beiden Gehäuseteile miteinander verspannen. Aus Gründen der Übersichtlichkeit ist in den Figuren nur eine Durchgangsöffnung mit einem Bezugszeichen versehen.

Man erkennt aus Figur 1, dass der Membranabschnitt 14 in der Draufsicht eine in etwa kreisrunde Außenkontur aufweist, wohingegen der Flanschabschnitt 12 in der Draufsicht in der in Figur 1 gezeigten beispielhaften Ausführungsform eine insgesamt in etwa viereckige Außenkontur aufweist. Diese wird durch einen umlaufenden und nach radial auswärts weisenden und vorliegend beispielhaft flächigen Rand 18 begrenzt. Man erkennt auch aus Figur 1, dass die Ventilmembran 10 vergleichsweise dünn ist, also in einer z-Richtung eine deutlich geringere Erstreckung aufweist als in einer x-Richtung und einer y-Richtung. Gleichwohl ist die Ventilmembran 10 insgesamt so ausreichend dick (Dicke D in Figur 1), dass der Rand 18 eine im Wesentlichen glatte ebene Fläche bildet.

In der Mitte des Membranabschnitts 14 ist vorliegend beispielhaft ein Abschnitt 20 angeordnet, von dem sich in z-Richtung nach oben ein Gewindezapfen 22 erstreckt. Dieser dient zur Verbindung beispielsweise mit einem nicht gezeigten Betätigungselement eines ebenfalls nicht gezeigten elektrischen, pneumatischen, hydraulischen oder manuellen Antriebs, mittels dem die Ventilmembran 10 längs zur z-Richtung bewegt werden kann. Durch eine solche Bewegung kann mittels der Ventilmembran 10 der Fluss eines Fluids gesteuert werden. Der Flanschabschnitt 12 und der Membranabschnitt 14 sind vorliegend beispielhaft insgesamt durch Vulkanisieren aus einem Gummimaterial hergestellt.

Bei der Ausführungsform von Figur 1 ist an dem Rand 18 auf der in Figur 1 dem Betrachter zugewandten Seite eine mit dem Flanschabschnitt 12 einstückige Lasche 24 vorhanden, die in der Draufsicht (entgegen der z-Richtung) eine in etwa rechteckige längliche Kontur hat mit einem seitlichen geraden nach radial auswärts weisenden flächigen Randabschnitt 18a. Auf diesem Randabschnitt 18a ist ein vorliegend beispielhaft durch einen rechteckigen Quader gebildetes Gehäuse 26 fest angeordnet bzw. aufgesetzt. In dem Gehäuse 26 ist ein in der Zeichnung nicht gezeichneter RFID-Chip aufgenommen. Dabei erkennt man aus Figur 1, das das Gehäuse 26 so auf den Randabschnitt 18a aufgesetzt ist, dass es von diesem absteht.

Das Gehäuse 26 ist vorzugsweise aus Kunststoff und weist einen Hohlraum auf, in dem der RFID-Chip angeordnet ist. Möglich ist auch, dass der RFID-Chip in das Gehäuse 26 bei dessen Herstellung, beispielsweise durch ein Spritzgussverfahren, eingespritzt wird. Der RFID-Chip ist in dem Gehäuse 26 jedenfalls so aufgenommen, dass er nicht zerstörungsfrei aus dem Gehäuse 26 entfernt werden kann.

Ein RFID-Chip kann beispielsweise einen Transponder mit Antenne sowie einen Datenträger umfassen. Die Kopplung des RFID-Chips mit einem Lese- und/oder Schreibgerät geschieht durch vom Lese- und/oder Schreibgerät erzeugte magnetische Wechselfelder in geringer Reichweite oder durch hochfrequente Radiowellen. Damit können nicht nur Daten übertragen werden, sondern kann der Transponder auch mit Energie versorgt werden. Das Lese- und/oder Schreibgerät enthält eine Software, die den eigentlichen Lese- und/oder Schreibprozess steuert, und eine RFID-Middleware mit Schnittstellen zu weiteren EDV-Systemen und Datenbanken. Auf dem RFID-Chip können Daten gespeichert sein, welche sowohl die Herstellung der Ventilmembran 10 als auch deren Betrieb betreffen.

Man erkennt aus Figur 1 ohne weiteres, dass das Gehäuse 26 so auf dem Randabschnitt 18a des Rahmens 18 der Ventilmembran 10 angeordnet ist, dass es, von außen (beispielsweise in y-Richtung gesehen) vollständig sichtbar ist. Um diese Sichtbarkeit noch zu verbessern, weist eine in Figur 1 gepunktet dargestellte Außenfläche 28 des Gehäuses 26 eine optisch auffällige Farbe auf.

Figur 2 zeigt eine zweite Ausführungsform einer Ventilmembran 10. Bei dieser ist das Gehäuse 26 nicht auf den Randabschnitt 18a des Rahmens 18 des Flanschabschnitts 12 bzw. der Lasche 24 aufgesetzt, sondern in einer in der Lasche 24 ausgebildeten Vertiefung 30 aufgenommen. Die Tiefe der Vertiefung 30 in y-Richtung ist dabei vorliegend beispielhaft etwas größer als die entsprechende Dimension des Gehäuses 26. Grundsätzlich könnte sie aber auch gleich oder kleiner sein als die entsprechende Dimension des Gehäuses 26, so dass in dem letztgenannten Fall das Gehäuse 26 über den Randabschnitt 18a der Lasche 24 überstehen würde. Die Dimension des Gehäuses 26 in z-Richtung entspricht ungefähr der Dicke D der Ventilmembran 10, sie könnte aber auch größer oder kleiner sein.

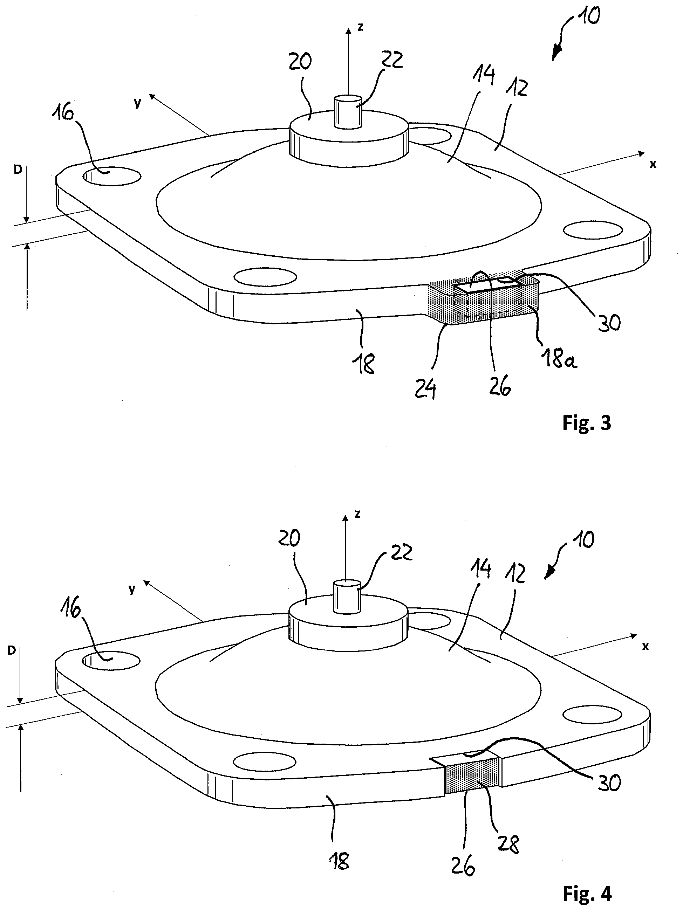

Figur 3 zeigt eine dritte Ausführungsform einer Ventilmembran 10, die nicht Teil der vorliegenden Erfindung ist. Bei dieser ist das Gehäuse 26 vollständig in der Lasche 24 aufgenommen und ist in x-Richtung und in y-Richtung vollständig von dem Material der Lasche 24 umgeben. Die Oberseite des Gehäuses 26 und die in Figur 3 nicht sichtbare Unterseite sind jedoch vom Material der Lasche 24 frei und daher von außen sichtbar.

Insbesondere bei der Ausführungsform von Figur 3 kann die Lasche 24 zunächst als vom Flanschabschnitt 12 der Ventilmembran 10 separates Teil hergestellt werden, und insofern beispielsweise eine vom Rest der Ventilmembran 10 abweichende optisch auffällige Farbe aufweisen, was in Figur 3 durch eine gepunktete Darstellung der Oberflächen der Lasche 24 angedeutet ist. Nach der Herstellung und der Integration des Gehäuses 26 in die Vertiefung 30 der Lasche 24 wird die Lasche 24 dann an den Rand 18 des Flanschabschnitts 12 beispielsweise angeklebt.

Figur 4 zeigt eine vierte Ausführungsform einer Ventilmembran 10. Diese weist keine Lasche auf. Stattdessen ist die Vertiefung 30 unmittelbar im Rand 18 des Flanschabschnitts 12 vorhanden, und das Gehäuse 26 mit dem RFID-Chip ist in dieser Vertiefung 30 angeordnet. Um die Klemmung des Flanschabschnitts 12 durch die Gehäuseteile des Membranventils nicht zu stören, ist es bei dieser Variante vorteilhaft, wenn die Erstreckung des Gehäuses 26 in z-Richtung kleiner ist als die Dicke D des Flanschabschnitts 12.

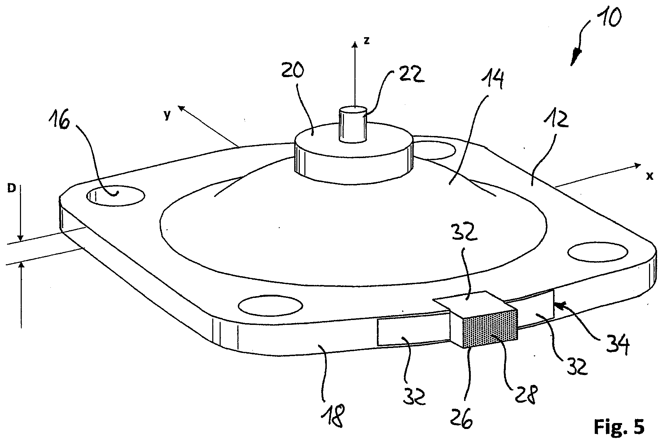

Figur 5 zeigt eine fünfte Ausführungsform einer Ventilmembran 10. Auch hier ist wiederum keine Lasche am Flanschabschnitt 12 vorhanden. Stattdessen ist das Gehäuse 26 auf den Rand 18 des Flanschabschnitts 12 aufgesetzt, steht also von diesem ab. Vorliegend beispielhaft sind flügelartige Klebeabschnitte 32 gezeichnet, die sich von dem Gehäuse 26 aus erstrecken und mit denen das Gehäuse 26 - zumindest auch - mit dem Flanschabschnitt 12 verbunden ist. Diese Klebeabschnitte 32 gehören insgesamt zu einer Verankerungseinrichtung 34, mit der das Gehäuse 26 an dem Flanschabschnitts 12 der Ventilmembran 10 unlösbar befestigt ist. "Unlösbar" bedeutet, dass ein Lösen des Gehäuses 26 vom Flanschabschnitt 12 zumindest nicht ohne eine Beschädigung des Gehäuses 26, der Verankerungseinrichtung 34 und/oder des Flanschabschnitts 12 möglich ist.

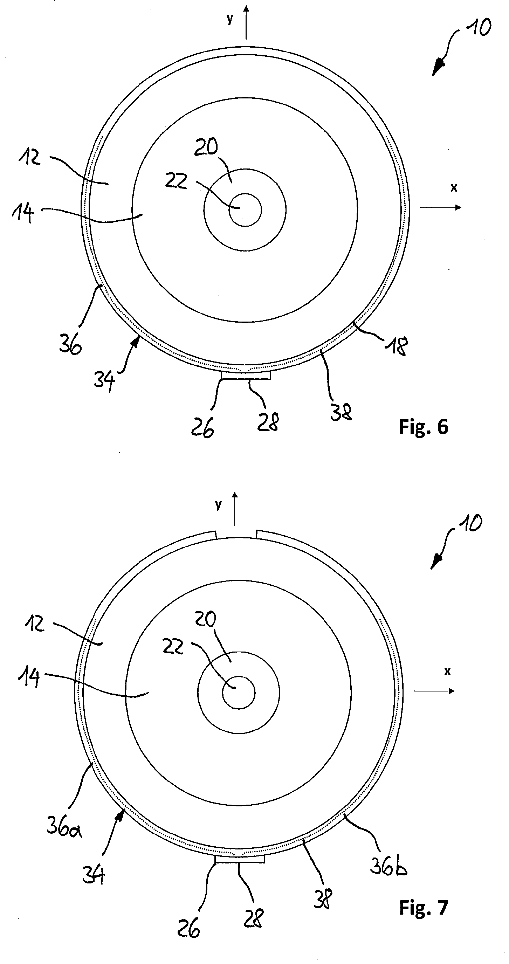

Figur 6 zeigt eine sechste Ausführungsform einer Ventilmembran 10. Anders als die Ventilmembranen 10 der Figuren 1-5 weist der Flanschabschnitt 12 bei der Ausführungsform von Figur 6 keine insgesamt im wesentlichen viereckige Außenkontur auf, sondern eine kreisrunde Außenkontur. Ähnlich wie bei der Ausführungsform von Figur 5 ist das Gehäuse 26 von außen auf den Rand 18 des Flanschabschnitts 12 aufgesetzt, steht also von diesem ab. An das Gehäuse 26 ist ein sich in Umfangsrichtung des Randes 18 erstreckender Halteabschnitt 36 in Form eines geschlossenen Rings einstückig angeformt, der im Presssitz auf dem Rand 18 des Flanschabschnitts 12 sitzt und insoweit das Gehäuse 26 - zumindest auch - an dem Flanschabschnitt 12 verankert. Der Halteabschnitt 36 gehört also zu der Verankerungseinrichtung 34. Um ein Verrutschen des Halteabschnitts 36 in Richtung der z-Achse zu verhindern, kann in dem Rand 18 des Flanschabschnitts 12 eine umlaufende nutartige Vertiefung (nicht gezeichnet) vorhanden sein, in der der ringförmige Halteabschnitt 36 zumindest teilweise angeordnet ist.

Eine Antenne 38 des in dem Gehäuse 26 aufgenommenen RFID-Chips kann sich vorliegend zu beiden Seiten des Gehäuses 26 längs zu dem ringförmigen Halteabschnitt 36 erstrecken. Dies gestattet es, mit einem Lese- und/oder Schreibgerät mit dem RFID-Chip drahtlos zu kommunizieren, auch wenn das Lese- und/oder Schreibgerät nicht direkt am Gehäuse 26 angeordnet ist.

Figur 7 zeigt eine siebte Ausführungsform einer Ventilmembran 10, die sehr ähnlich ist zu jener von Figur 6. Allerdings umfasst die Verankerungseinrichtung 34 nicht einen ringförmigen geschlossenen Halteabschnitt, sondern zwei Halteabschnitte 36a und 36b, die als Ringsegmente ausgebildet sind. Auf diese Weise kann eine Ausdehnung des Umfangs des Flanschabschnitts 12 dann, wenn dieser zwischen zwei Gehäuseteilen des Membranventils verklemmt wird, aufgefangen werden.

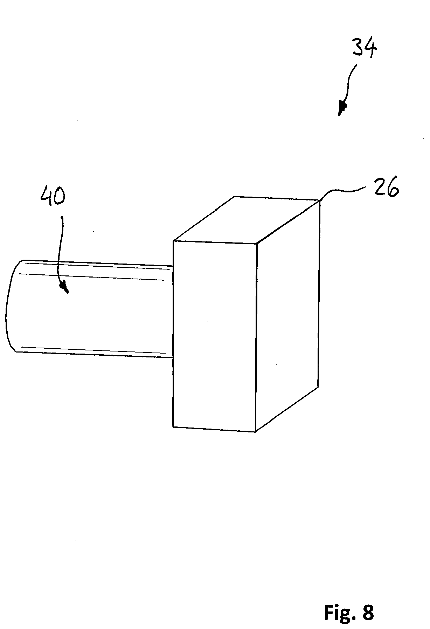

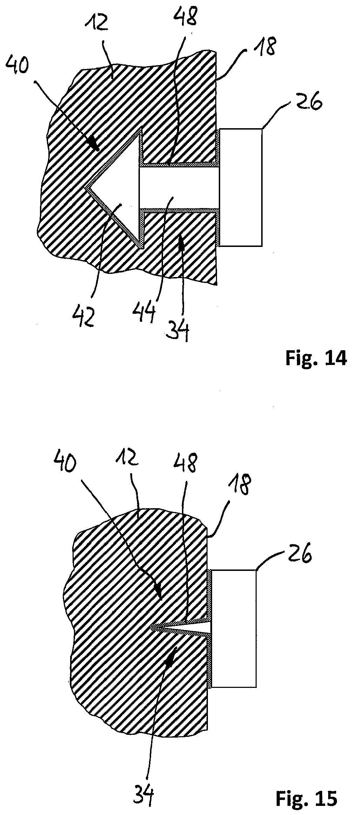

In den Figuren 8-13 sind weitere Ausgestaltungen von Verankerungseinrichtungen 34 gezeigt, wobei die dort gezeigten Verankerungseinrichtungen 34 jeweils unterschiedlich ausgestaltete Verankerungszapfen 40 umfassen. Diese sind vorzugsweise aus Kunststoff hergestellt, einstückig mit dem Gehäuse 26 ausgebildet (beispielsweise durch Kunststoff-Spritzguss), ragen von dem Gehäuse 26 ab in das in den Figuren nicht gezeichnete Material des Flanschabschnitts 12 hinein und erstrecken sich in Einbaulage in y-Richtung (Figuren 1-5). Vorzugsweise wird bei der Montage des Gehäuses 26 am Flanschabschnitt 12 der Verankerungszapfen 40 in eine vorgeformte Öffnung im Material des Flanschabschnitts 12 eingepresst. Wie weiter unten beispielhaft im Zusammenhang mit der speziellen Ausführungsform der Figur 15 noch dargestellt werden wird, ist dies jedoch nicht zwingend notwendig.

Der in Figur 8 gezeigte Verankerungszapfen 40 stellt die einfachste Form eines Verankerungszapfens 40 dar, er ist nämlich als einfacher gerader Zylinder ausgebildet. Er kann massiv sein, also in seinem Inneren mit Material ausgefüllt sein, oder er kann einen ringförmigen Querschnitt mit einem vom Gehäuse 26 abragenden offenen Ende aufweisen. In diesem Fall wäre eine vorgeformte ringförmige Öffnung bzw. ein vorgeformter ringförmiger Schlitz, der vom Rand 18 des Flanschabschnitts 12 ausgeht und sich in y-Richtung erstreckt, für ein leichteres Eintreiben des Verankerungszapfens 40 in das Material des Flanschabschnitts 12 vorteilhaft.

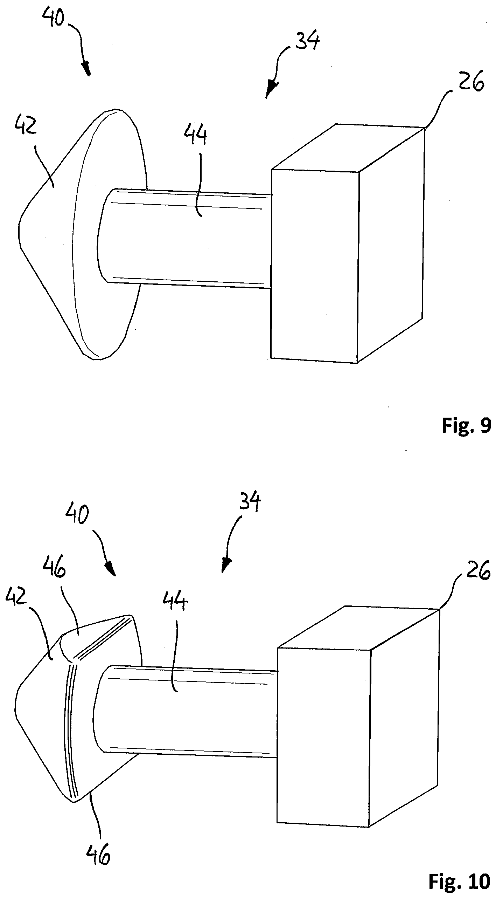

Die in den Figuren 9-13 gezeigten Verankerungszapfen 40 weisen alle einen Formschlussabschnitts 42 auf, welcher das Gehäuse 26 - zumindest auch - durch Formschluss im Material des Flanschabschnitts 12 verankert und am abragenden Ende eines zylindrischen Verbindungsabschnitts 44 ausgebildet sind. Sämtliche in den Figuren 9-13 gezeigten Formschlussabschnitte 42 sind dabei pilzkopfartig ausgebildet. Grundsätzlich denkbar wäre alternativ oder zusätzlich hierzu, auf der Mantelfläche des Verbindungsabschnitts 44 eine Riffelung (nicht gezeichnet) oder Widerhakenabschnitte (ebenfalls nicht gezeichnet) oder Ähnliches vorzusehen, welche ein Herausziehen des Verankerungszapfens 40 aus dem Material des Flanschabschnitts 12 nach dem Eintreiben des Verankerungszapfens 40 in das Material erschweren.

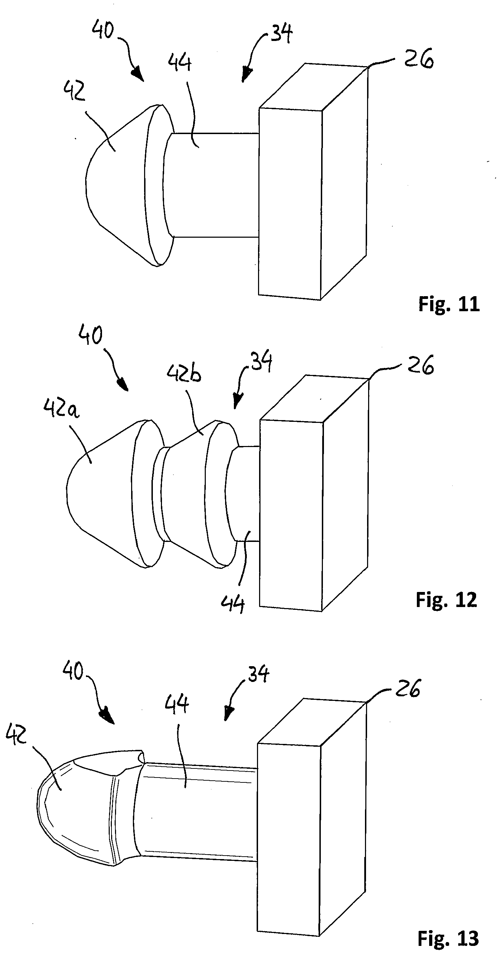

Der in Figur 9 gezeigte Formschlussabschnitt hat die Form einer klassischen Kegelspitze. Der in Figur 10 gezeigte Formschlussabschnitt 42 ist hierzu ähnlich, jedoch seitlich abgeflacht (Bezugszeichen 46). Der in Figur 11 gezeigte Formschlussabschnitt 42 ist ähnlich zu dem von Figur 9, jedoch mit einer stärker abgerundeten Spitze. Der in Figur 12 gezeigte Verankerungszapfen 40 weist zwei axial hintereinander angeordnete Formschlussabschnitte 42a und 42b ähnlich zu dem von Figur 11 auf. Der in Figur 13 gezeichnete Formschlussabschnitt 42 ist wiederum ähnlich zu dem von Figur 11, er weist wiederum zwei seitliche Abflachungen 46 auf.

Die in den Figuren 14 und 15 gezeigten Verankerungseinrichtungen 34 weisen zusätzlich zu einem Verankerungszapfen 40 noch eine durch eine gepunktet gezeichnete Klebeschicht gebildete Klebung 48 auf, welche den Verankerungszapfen 40 zusätzlich am bzw. im Material des Flanschabschnitts 12 verankert und damit das Gehäuse 26 am Flanschabschnitt 12 unlösbar befestigt. Dabei wird für die Klebeschicht 48 vorteilhafterweise ein solches Material gewählt, welches bei Raumtemperatur zunächst noch keine Klebeeigenschaft hat.

Auf diese Weise kann die Klebeschicht 48 beispielsweise vorab auf die Oberfläche des Verankerungszapfens 40 und/oder die dem Rand 18 des Flanschabschnitts 12 zugewandte Oberfläche des Gehäuses 26 aufgetragen werden, ohne dass das Eindringen des Verankerungszapfens 40 in das Material des Flanschabschnitts 12 oder/und ganz allgemein die Handhabung des Gehäuses 26 zusammen mit der Verankerungseinrichtung 34 durch die Klebung 48 behindert wird. Erst durch eine nachfolgende Temperaturerhöhung bei bereits am Flanschabschnitt 12 angeordneten Gehäuse 26 und/oder im Flanschabschnitt 12 angeordnetem Verankerungszapfen 40 wird eine Aktivierungstemperatur der Klebung 48 überschritten, wodurch diese den Verankerungszapfen 40 und/oder das Gehäuse 26 mit dem Material des Flanschabschnitts 12 verklebt.

Im Zusammenhang mit Figur 15 sei darauf hingewiesen, dass der dort gezeichnete Verankerungszapfen 40 als einfacher spitzer Dorn ausgebildet ist, der vergleichsweise einfach in das Material des Flanschabschnitts 12 eingepresst bzw. eingetrieben werden kann, ohne dass dort vorab eine Öffnung zur Aufnahme des Verankerungszapfens 40 vorhanden ist. Auf diese Weise kann das Gehäuse 26 sehr einfach am Flanschabschnitt 12 gesichert werden, um dann durch eine Aktivierung der Klebung 48 letztlich unlösbar am Rand 18 des Flanschabschnitts 12 befestigt zu werden.

Dabei ist grundsätzlich denkbar, dass das Material, aus dem die Klebung 48 hergestellt ist, ebenfalls einen optisch auffälligen Farbstoff umfasst. Bei der Aktivierung seitlich austretender verflüssigter Klebstoff 48 kann so einfach erkannt werden und dient zusätzlich zur Markierung der Stelle, an der das Gehäuse 26 am Flanschabschnitt 12 angeordnet ist.

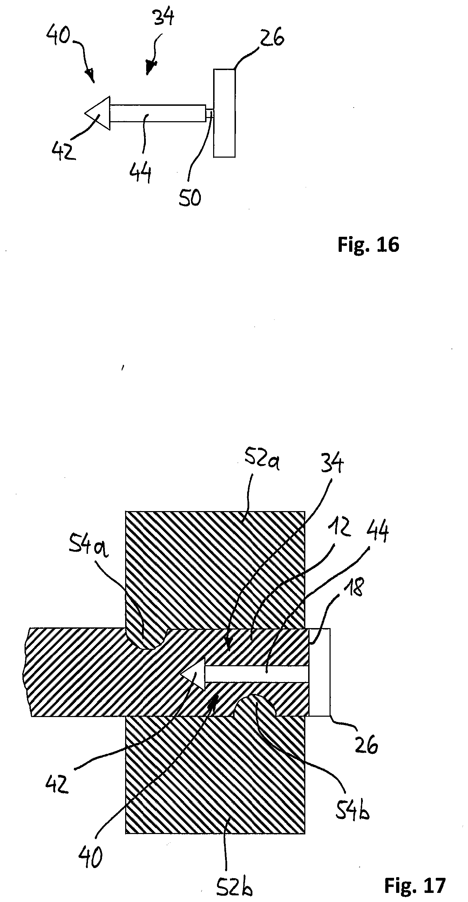

Figur 16 zeigt eine Seitenansicht auf ein Gehäuse 26 mit einer Verankerungseinrichtung 34, die grundsätzlich ähnlich ausgebildet ist zu jener der Figur 9. Zusätzlich ist jedoch zwischen dem Verbindungsabschnitt 44 und dem Gehäuse 26 eine Sollbruchstelle 50 vorhanden, die vorliegend durch einen Abschnitt mit einem geringeren Durchmesser gebildet ist. Alternativ oder zusätzlich kann die Sollbruchstelle 50 auch durch ein anderes Material oder eine spezielle Struktur gebildet werden. Wird nach der Befestigung des Gehäuses 26 am Flanschabschnitt 12 versucht, das Gehäuse 26 vom Flanschabschnitt 12 wieder zu entfernen, bricht diese Sollbruchstelle 50 bei einer Zugkraft, die kleiner ist als jene Kraft, die erforderlich ist, um den Formschlussabschnitt 42 aus dem Material des Flanschabschnitts 12 wieder herauszuziehen.

Figur 17 zeigte den Flanschabschnitt 12 einer Ventilmembran 10, ein Gehäuse 26 mit einer Verankerungseinrichtung 34 sowie zwei Gehäuseteile 52a und 52b eines Gehäuses eines Membranventils im seitlichen Schnitt entsprechend einer y-z-Ebene beispielsweise von Figur 1. Um eine fluiddichte Abdichtung zu erreichen, weisen die beiden Gehäuseteile 52a und 52b jeweilige Klemmwulste 54a und 54b auf. Man erkennt aus Figur 17, dass der dort obere Klemmwulst 54a den

Flanschabschnitt 12 an einer vom Formschlussabschnitt 42 aus gesehen radial inneren Stelle klemmt, wohingegen der in Figur 17 untere Klemmwulst 54b den Flanschabschnitt 12 an einer vom Formschlussabschnitt 42 aus gesehen radial äußeren Stelle klemmt. Insgesamt kann somit gesagt werden, dass die Klemmung des Flanschabschnitts 12 durch die beiden Gehäuseteile 52a und 52b außerhalb von dem Formschlussabschnitt 42 erfolgt.

Es versteht sich, dass die oben im Zusammenhang mit den Figuren 8-17 erläuterten Verankerungseinrichtungen 34 einzeln oder in Kombination zur Befestigung des Gehäuses 26 bei den in den Figuren 1 bis 7 gezeigten Ventilmembranen 10 Verwendung finden können. Insbesondere im Zusammenhang mit der oben erwähnten Klebung 48 sei darauf hingewiesen, dass diese grundsätzlich auch ohne Einsatz eines Verankerungszapfens 40 verwendet werden kann.

## Patentansprüche

1. Eine Ventilmembran (10) umfassend einen Flanschabschnitt (12) und einen Membranabschnitt (14), wobei der Membranabschnitt (14) zu einer Bewegung quer zur Erstreckung der Ventilmembran (10) durch einen Antrieb vorgesehen ist, wobei die Ventilmembran (10) einen in einem Gehäuse (26) aufgenommenen elektronischen Datenträger umfasst, wobei der Datenträger zu einem RFID-Chip gehört, und wobei das Gehäuse (26) an dem Flanschabschnitt (12) befestigt ist,
**dadurch gekennzeichnet,**
**dass** das Gehäuse (26) an einem umlaufenden und nach radial auswärts weisenden und wenigstens bereichsweise flächigen Rand (18) des Flanschabschnitts (12) derart befestigt ist, sodass das Gehäuse (26) von radial außen auf den flächigen Rand (18) des Flanschabschnitts (12) gesehen wenigstens zum Teil sichtbar ist.

2. Die Ventilmembran (10) nach Anspruch 1, **dadurch gekennzeichnet, dass** in oder an dem Rand (18) eine Vertiefung (30) vorhanden ist, in der das Gehäuse (26) mindestens bereichsweise aufgenommen ist.

3. Die Ventilmembran (10) nach wenigstens einem der vorhergehenden Ansprüche, **dadurch gekennzeichnet, dass** das Gehäuse (26) von dem Rand (18) absteht.

4. Die Ventilmembran (10) nach wenigstens einem der vorhergehenden Ansprüche, **dadurch gekennzeichnet, dass** an dem Rand (18) eine Lasche (24) vorhanden ist, in der das Gehäuse (26) mindestens bereichsweise aufgenommen oder auf die das Gehäuse (26) aufgesetzt ist.

5. Die Ventilmembran (10) nach Anspruch 4, **dadurch gekennzeichnet, dass** die Lasche (24) eine vom Rest der Ventilmembran (10) abweichende, vorzugsweise eine optisch auffällige Farbe aufweist.

6. Die Ventilmembran (10) nach wenigstens einem der vorhergehenden Ansprüche, **dadurch gekennzeichnet, dass** an dem Gehäuse (26) mindestens eine Verankerungseinrichtung (34) zur Verankerung des Gehäuses (26) an dem oder in dem Flanschabschnitt (12) vorhanden ist.

7. Die Ventilmembran (10) nach Anspruch 6, **dadurch gekennzeichnet, dass** die Verankerungseinrichtung (34) mindestens einen Verankerungszapfen (40) umfasst.

8. Die Ventilmembran (10) nach Anspruch 7, **dadurch gekennzeichnet, dass** der Verankerungszapfen (40) mindestens einen Formschlussabschnitt (42) aufweist.

9. Die Ventilmembran (10) nach Anspruch 8, **dadurch gekennzeichnet, dass** der Verankerungszapfen (40) mindestens zwei vorzugsweise hintereinander angeordnete Formschlussabschnitte (42a, 42b) aufweist.

10. Die Ventilmembran (10) nach wenigstens einem der Ansprüche 8-9, **dadurch gekennzeichnet, dass** der Formschlussabschnitt (42) pilzkopfartig ausgebildet ist.

11. Die Ventilmembran (10) nach Anspruch 10, **dadurch gekennzeichnet, dass** der pilzkopfartig ausgebildete Formschlussabschnitt (42) eine seitliche Abflachung (46) aufweist.

12. Die Ventilmembran (10) nach wenigstens einem der Ansprüche 6-11, **dadurch gekennzeichnet, dass** die Verankerungseinrichtung (34) mindestens einen sich mindestens teilweise in Umfangsrichtung des Rands (18) erstreckenden Halteabschnitt (36) aufweist.

13. Die Ventilmembran (10) nach Anspruch 12, **dadurch gekennzeichnet, dass** der Halteabschnitt (36) wenigstens teilweise in einer im Rand (18) des Flanschabschnitts (12) vorhandenen nutartigen Vertiefung angeordnet ist.

14. Die Ventilmembran (10) nach wenigstens einem der Ansprüche 6-13, **dadurch gekennzeichnet, dass** eine Antenne (38) in der Verankerungseinrichtung (34) angeordnet ist.

15. Die Ventilmembran (10) nach wenigstens einem der Ansprüche 5-14, **dadurch gekennzeichnet, dass** zwischen der Verankerungseinrichtung (34) und dem Gehäuse (26) eine Sollbruchstelle (50) vorhanden ist.

16. Die Ventilmembran (10) nach wenigstens einem der vorhergehenden Ansprüche, **dadurch gekennzeichnet, dass** das Gehäuse (26) an dem Flanschabschnitt (12) wenigstens auch durch eine Klebung (48) befestigt ist.

17. Die Ventilmembran (10) nach Anspruch 15, **dadurch gekennzeichnet, dass** die Klebung (48) durch Erwärmen aktivierbar ist.

18. Die Ventilmembran (10) nach wenigstens einem der Ansprüche 16-17, **dadurch gekennzeichnet, dass** ein Material, aus dem die Klebung (48) hergestellt ist, einen vorzugsweise optisch auffälligen Farbstoff umfasst.

19. Die Ventilmembran (10) nach wenigstens einem der vorhergehenden Ansprüche, **dadurch gekennzeichnet, dass** mindestens eine von außen sichtbare Oberfläche (28) des Gehäuses (26) wenigstens bereichsweise eine optisch auffällige Farbe aufweist.

20. Ein Membranventil, **dadurch gekennzeichnet, dass** es eine Ventilmembran (10) nach wenigstens einem der vorhergehenden Ansprüche umfasst.

21. Das Membranventil nach Anspruch 20, **dadurch gekennzeichnet, dass** die Ventilmembran (110) eine Verankerungseinrichtung (34) mit einem Formschlussabschnitt (42) aufweist, und dass ein Ventilgehäuse (52a, 52b) den Flanschabschnitt (12) der Ventilmembran (10) in axialer Richtung der Verankerungseinrichtung (34) gesehen außerhalb des Formschlussabschnitts (42) klemmt.

## Claims

1. Valve diaphragm (10) comprising a flange section (12) and a diaphragm section (14), wherein the diaphragm section (14) is intended for a movement transversely to the extension of the valve diaphragm (10) by a drive, wherein the valve diaphragm (10) comprises an electronic data carrier accommodated in a housing (26), wherein the data carrier belongs to an RFID chip, and wherein the housing (26) is attached to the flange section (12),
**characterised in that**
the housing (26) is attached to a circumferential and at least partially planar radially-outward-facing edge (18) of the flange section (12) in such a way that the housing (26) is at least partially visible when viewed from the radial outside to the planar edge (18) of the flange section (12).

2. Valve diaphragm (10) according to claim 1, **characterised in that** there is a depression (30) in or at the edge (18) in which the housing (26) is at least partially received.

3. Valve diaphragm (10) according to at least one of the preceding claims, **characterised in that** the housing (26) protrudes from the edge (18).

4. Valve diaphragm (10) according to at least one of the preceding claims, **characterised in that** there is a lug (24) at the edge (18) in which the housing (26) is at least partially received or on which the housing (26) is placed.

5. Valve diaphragm (10) according to claim 4, **characterised in that** the lug (24) has a colour that differs from the rest of the valve diaphragm (10), preferably an optically striking colour.

6. Valve diaphragm (10) according to at least one of the preceding claims, **characterised in that** at least one anchoring device (34) for anchoring the housing (26) to or in the flange section (12) is present on the housing (26) .

7. Valve diaphragm (10) according to claim 6, **characterised in that** the anchoring device (34) comprises at least one anchoring pin (40).

8. Valve diaphragm (10) according to claim 7, **characterised in that** the anchoring pin (40) has at least one form-fitting section (42).

9. Valve diaphragm (10) according to claim 8, **characterised in that** the anchoring pin (40) has at least two form-fitting sections (42a, 42b), preferably arranged one after the other.

10. Valve diaphragm (10) according to at least one of the claims 8-9, **characterised in that** the form-fitting section (42) is shaped like a mushroom head.

11. Valve diaphragm (10) according to claim 10, **characterised in that** the mushroom head-shaped form-fitting section (42) has a lateral flattening (46).

12. Valve diaphragm (10) according to at least one of the claims 6-11, **characterised in that** the anchoring device (34) has at least one holding section (36) extending at least partially in the circumferential direction of the edge (18).

13. Valve diaphragm (10) according to claim 12, **characterised in that** the holding section (36) is at least partially arranged in a groove-like depression in the edge (18) of the flange section (12).

14. Valve diaphragm (10) according to at least one of the claims 6-13, **characterised in that** an antenna (38) is arranged in the anchoring device (34).

15. Valve diaphragm (10) according to at least one of the claims 5-14, **characterised in that** there is a predetermined breaking point (50) between the anchoring device (34) and the housing (26).

16. Valve diaphragm (10) according to at least one of the preceding claims, **characterised in that** the housing (26) is at least also attached to the flange section (12) by an adhesive (48).

17. Valve diaphragm (10) according to claim 15, **characterised in that** the adhesive (48) can be activated by heating.

18. Valve diaphragm (10) according to at least one of the claims 16-17, **characterised in that** a material from which the adhesive (48) is made comprises a preferably visually striking dye.

19. Valve diaphragm (10) according to at least one of the preceding claims, **characterised in that** at least one surface (28) of the housing (26) visible from the outside has an optically striking colour, at least in some areas.

20. Diaphragm valve, **characterised in that** it comprises a valve diaphragm (10) according to at least one of the preceding claims.

21. Diaphragm valve according to claim 20, **characterised in that** the valve diaphragm (110) has an anchoring device (34) with a form-fitting section (42) and that a valve housing (52a, 52b) clamps the flange section (12) of the valve diaphragm (10) outside of the form-fitting section (42), viewed in the axial direction of the anchoring device (34).

## Revendications

1. Membrane de vanne (10) comprenant une section de bride (12) et une section de membrane (14), dans laquelle la section de membrane (14) est prévue pour être déplacée transversalement à l'extension de la membrane de vanne (10) par un entraînement, dans laquelle la membrane de vanne (10) comprend un support de données électronique logé dans un boîtier (26), dans laquelle le support de données appartient à une puce RFID, et dans laquelle le boîtier (26) est fixé à la section de bride (12),
**caractérisée par le fait**
**que** le boîtier (26) est fixé à un bord (18) circonférentiel de la section de bride (12), qui est orienté radialement vers l'extérieur et au est moins en partie plat, de telle sorte que, vu radialement de l'extérieur sur le bord plat (18) de la section de bride (12), le boîtier (26) est au moins en partie visible.

2. Membrane de vanne (10) selon la revendication 1, **caractérisée par le fait qu'**un creux (30) est présent dans ou sur le bord (18), dans lequel le boîtier (26) est logé au moins par zones.

3. Membrane de vanne (10) selon au moins l'une quelconque des revendications précédentes, **caractérisée par le fait que** le boîtier (26) fait saillie du bord (18).

4. Membrane de vanne (10) selon au moins l'une quelconque des revendications précédentes, **caractérisée par le fait que** sur le bord (18) est présente une languette (24) dans laquelle le boîtier (26) est reçu au moins par zones ou sur laquelle le boîtier (26) est placé.

5. Membrane de vanne (10) selon la revendication 4, **caractérisée par le fait que** la languette (24) présente une couleur qui est différente du reste de la membrane de vanne (10), de préférence une couleur optiquement frappante.

6. Membrane de vanne (10) selon au moins l'une quelconque des revendications précédentes, **caractérisée par le fait qu'**au moins un dispositif d'ancrage (34) destiné à ancrer le boîtier (26) sur ou dans la section de bride (12) est présent sur le boîtier. (26).

7. Membrane de vanne (10) selon la revendication 6, **caractérisée par le fait que** le dispositif d'ancrage (34) comprend au moins un tenon d'ancrage (40).

8. Membrane de vanne (10) selon la revendication 7, **caractérisée par le fait que** le tenon d'ancrage (40) présente au moins une section à engagement positif (42) .

9. Membrane de vanne (10) selon la revendication 8, **caractérisée par le fait que** le tenon d'ancrage (40) présente au moins deux sections à engagement positif (42a, 42b) qui sont disposées de préférence les unes derrière les autres.

10. Membrane de vanne (10) selon au moins l'une quelconque des revendications 8 à 9, **caractérisée par le fait que** la section à engagement positif (42) est conçue à la manière d'une tête de champignon.

11. Membrane de vanne (10) selon la revendication 10, **caractérisée par le fait que** la section à engagement positif (42) conçue à la manière d'une tête de champignon (42) présente un méplat latéral (46).

12. Membrane de vanne (10) selon au moins l'une quelconque des revendications 6 à 11, **caractérisée par le fait que** le dispositif d'ancrage (34) présente au moins une section de maintien (36) qui s'étend au moins en partie dans la direction circonférentielle du bord (18) .

13. Membrane de vanne (10) selon la revendication 12, **caractérisée par le fait que** la section de maintien (36) est disposée au moins en partie dans un creux de type rainure qui est présent dans le bord (18) de la section de bride (12).

14. Membrane de vanne (10) selon au moins l'une quelconque des revendications 6 à 13, **caractérisée par le fait qu'**une antenne (38) est disposée dans le dispositif d'ancrage (34).

15. Membrane de vanne (10) selon au moins l'une quelconque des revendications 5 à 14, **caractérisée par le fait qu'**un point destiné à la rupture (50) est présent entre le dispositif d'ancrage (34) et le boîtier (26).

16. Membrane de vanne (10) selon au moins l'une quelconque des revendications précédentes, **caractérisée par le fait que** le boîtier (26) est fixé à la section de bride (12) au moins également par un collage (48).

17. Membrane de vanne (10) selon la revendication 15, **caractérisée par le fait que** le collage (48) est activable par chauffage.

18. Membrane de vanne (10) selon au moins l'une quelconque des revendications 16 à 17, **caractérisée par le fait qu'**un matériau à partir duquel le collage (48) est réalisé comprend un colorant de préférence optiquement frappant.

19. Membrane de vanne (10) selon au moins l'une quelconque des revendications précédentes, **caractérisée par le fait qu'**au moins une surface (28) du boîtier (26), qui est visible de l'extérieur, présente au moins par zones une couleur optiquement frappante.

20. Vanne à membrane, **caractérisée par le fait qu'**elle comprend une membrane de vanne (10) selon au moins l'une quelconque des revendications précédentes.

21. Vanne à membrane selon la revendication 20, **caractérisée par le fait que** la membrane de vanne (110) présente un dispositif d'ancrage (34) avec une section à engagement positif (42), et que, vu dans la direction axiale du dispositif d'ancrage (34), un boîtier de vanne (52a, 52b) serre la section de bride (12) de la membrane de vanne (10) à l'extérieur de la section à engagement positif (42).
